Europäisches Patentamt

European Patent Office

Office européen des brevets

(11) Publication number: **0 054 982**
**B1**

(12) **EUROPEAN PATENT SPECIFICATION**

(45) Date of publication of patent specification: **06.08.86**

(51) Int. Cl.⁴: **G 01 S 7/28, G 01 S 13/52**

(21) Application number: **81201188.0**

(22) Date of filing: **27.10.81**

(54) Threshold circuit for radar video data.

(30) Priority: **22.12.80 NL 8006950**

(43) Date of publication of application:
**30.06.82 Bulletin 82/26**

(45) Publication of the grant of the patent:
**06.08.86 Bulletin 86/32**

(84) Designated Contracting States:
**BE CH DE FR GB IT LI NL SE**

(56) References cited:
**US-A-3 487 405**
**US-A-3 610 901**
**US-A-4 044 352**
**US-A-4 213 127**

**THE MARCONI REVIEW, vol. 40, no. 207, Fourth quarter 1977 GREAT BADDOW (GB) G.R. MARTIN: "Radar strike extraction in clutter using two-dimensional spatial integration techniques" pages 197-224**

(73) Proprietor: **HOLLANDSE SIGNAALAPPARATEN B.V.**
**Zuidelijke Havenweg 40 P.O. Box 42**
**NL-7550 GD Hengelo (NL)**

(72) Inventor: **Bergman, Jan**
**Ververstraat 40**
**NL-7481 KP Haaksbergen (NL)**

(74) Representative: **Kradolfer, Theodorus Albertus Clemens, Drs. et al**
**Patent Department Hollandse Signaalapparaten B.V. P.O. Box 42**
**NL-7550 GD Hengelo (NL)**

(56) References cited:

**INSTITUTION OF ELECTRICAL ENGINEERS LONDON (GB) CONFERENCE PUBLICATION no. 105, 1973 RADAR-PRESENT AND FUTURE Conference held in London, 23-25 October 1973 V. GREGERS HANSEN: "Constant false alarm rate processing in search radars" pages 325-332**

# Description

The invention relates to a threshold circuit comprising: a shift memory consisting of at least $2k+m$ elements, which memory is supplied with sampled and digitised radar video data; two adder circuits, one of which being connected to the outputs of the first k elements of the shift memory and the other to the outputs of the last k elements of the shift memory; a selection circuit connected to the adder circuits, which selection circuit passes the greater of the two output signals from the adder circuits, whereby the passed output signal renders a fast threshold value for the radar video data from the centre element of the shift memory; and a noise level detector rendering a slow threshold value for the radar data from the centre element of the shift memory. Such a threshold circuit is known from the article "Radar strike extraction in clutter using two-dimensional spatial integration techniques" by G. R. Martin in The Marconi Review, vol. XL, No. 207, fourth quarter 1977, p. 197—224. In this article the radar video data from the centre element of the shift memory is reduced by the fast threshold value, while the threshold circuit further comprises a comparator to pass and to quantise the radar video data reduced by the fast threshold value when exceeding the slow threshold value. The article does not teach how the slow threshold value can be obtained. The purpose of the invention is to provide a system of thresholding which is more sophisticated than known from the above article and which suppresses noise, as well as clutter, extending over a large number of range quants, particularly rain clutter.

According to the invention, the threshold circuit is characterised in that the noise level detector is connected to the selection circuit and that the threshold circuit further comprises: a comparator for determining the greater of the output signals from the selection circuit and the noise level detector; switching means for passing the greater of the two threshold values under control of the comparator output signal; and a gate circuit for passing the radar video data from the shift memory, in so far as the amplitude of said video data is in excess of the greater threshold value and is corrected by the second threshold.

If such a threshold circuit is utilised in a pulse radar equipped with a n-point FFT processor, the shift memory is supplied with radar video data per range quant for each of the n frequency output signals of this processor. Therefore, according to the invention, each element of the shift memory consists of n subelements, and the radar video data, supplied via the n frequency output channels of the FFT processing unit, is transferred serially into the shift memory (1), while during a time interval corresponding with the shift frequency of the shift memory (1) the $p^{th}$ subelements, where p is successively $1, 2, \ldots, n$, are read out in two groups of k signals for processing in the adder circuits (2, 3) on a time-sharing basis, and for each of the n frequency output channels a first and a second threshold is established and the gate circuit (13) passes the radar video data supplied by the shift memory (1) through the appropriate frequency output channel, in so far as the video amplitude is in excess of the larger of the thresholds established for said frequency output channel and is reduced by the second threshold established for said frequency output channel.

The invention will now be described in greater detail with reference to the accompanying drawings, of which:

Fig. 1 is a block diagram of the threshold circuit according to the invention, and

Fig. 2 is a diagram, illustrating the operation of a part of the threshold circuit.

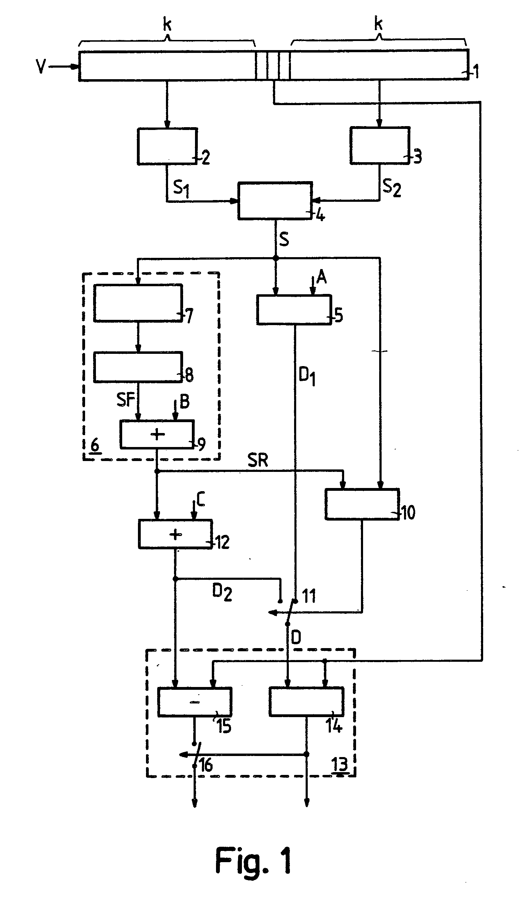

In Fig. 1 the shift memory, denoted by 1, comprises $2k+m$ elements, with $m=3$ elements. Connected to the first and the last k elements of the shift memory are an adder circuit 2 and 3, respectively. Denoting the content of memory element i by $a_i$, the output signals of adder circuits 2 and 3 can be expressed by:

$$S_1 = k. \sum_{i=1}^{k} a_i \quad \text{and} \quad S_2 = k. \sum_{i=k+4}^{2k+3} a_i,$$

where k is a constant.

A selection circuit 4 determines and passes the greater of these sum values, which is denoted by S.

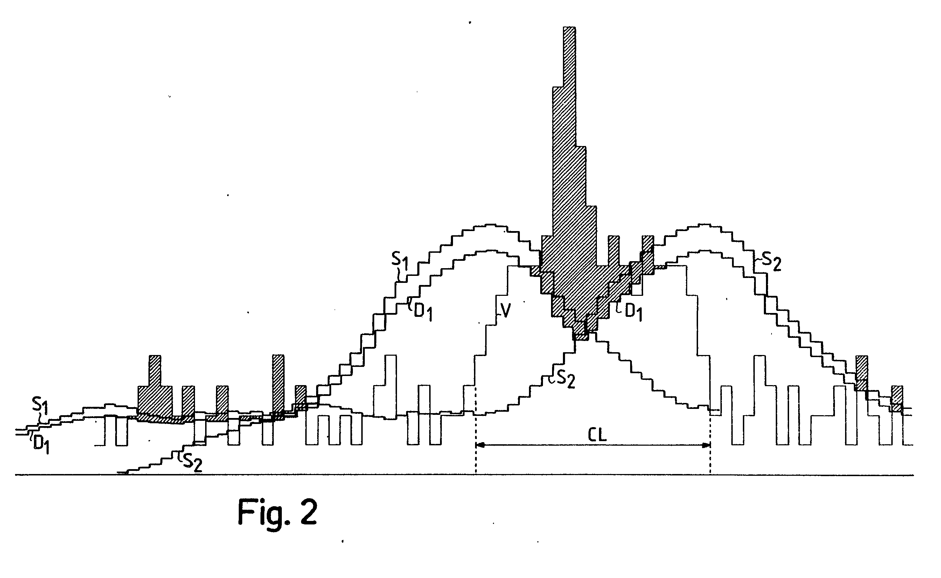

Fig. 2 shows a logarithmically amplified, sampled and digitised unipolar radar video signal V. This signal is supplied to shift memory 1 and shifted through this memory at a frequency corresponding with the division of the measuring range into range quants; the content of each element in the shift memory thus corresponds with the signal received within a range quant. Also shown in Fig. 2 are the signals $S_1$ and $S_2$; signal S is represented by the envelope of $S_1$ and $S_2$. From signal S the adder circuit 5 derives a first threshold value $D_1 = S + A$, where A is a constant. Threshold $D_1$ is also called a "fast" threshold, expressing that $D_1$ reacts fast to an increase in the strength of the received signal, such that a clutter area CL, as shown in Fig. 2, extending over numerous range quants is completely suppressed by threshold $D_1$. The target echo and noise signal, shown shaded in Fig. 2, exceed the fast threshold $D_1$.

The threshold circuit of Fig. 1 further comprises a noise level detector 6 connected to selection circuit 4. Detector 6 consists of a circuit 7 for determining the minimum value of signal S per azimuth scan, a low-pass filter 8 connected to circuit 7, and an adder 9. Circuit 7 is hereinafter referred to as "dip finder". The output signal of dip finder 7 follows the input signal, provided the amplitude of the latter signal is smaller than the amplitude already gained by the output signal; if this is not so, the output signal of dip finder 7 remains unchanged. This process is repeated each following radar scan. Thus, with each scan the output signal of dip finder 7 slews to the minimum value of S and retains this value. The output signal of dip finder 7 is fed to low-pass filter 8; this is a recursive filter, in which the output signal is incremented by one unit when the applied signal is greater than this output signal and decremented by one unit when the applied signal is smaller than the output signal. In this way a "slow threshold" is obtained. This is the threshold that assumes the average noise level. Output signal SF of filter 8 is supplied to adder 9 to produce signal SR by incrementing the filter output signal by an adjustable constant B. This constant is so selected that, in the presence of noise alone, the SR signal becomes approximately equal to the peak value of the S signal.

The S signal from selection circuit 4 and the SR signal from noise level detector 6 are fed to a comparator 10. The output signal of comparator 10 is used as control signal for switch 11. When $S \geq SR$, the fast threshold $D_1$ passes through switch 11. In case $S < SR$, the switch passes the $D_2$ signal; $D_2$ represents the slow threshold obtained from the SR signal by raising SR with an adjustable constant C in adder 12. Constant C ensures that the slow threshold level is just above the video noise.

The threshold value, passed through switch 11, is denoted by D and is supplied to gate 13. This gate passes the video data from the centre element of the shift memory, in so far as the video amplitude is in excess of threshold D and is reduced by the value of threshold $D_2$. Gate 13 comprises a comparator 14, a subtracter 15 and a switch 16. In comparator 14 the video data from the shift memory is compared with threshold D; if the video data is in excess of threshold D, switch 16 closes and the video data, reduced by $D_2$ in subtracter 15, may be passed.

Should the video signal V be processed in a linear instead of in a logarithmic form, before being supplied to the shift memory, adders 5, 9 and 12 should be replaced with multipliers, while $D_1 = S.A$, $SR = SF.B$ and $D_2 = SR.C$. In addition, subtracter 15 should be replaced with a divider.

With the application of the here-described threshold circuit in a pulse radar apparatus provided with an n-point FFT processing unit, a separate threshold value should in general be selected for each of the n frequency output signals of this processing unit, while for each range quant and for each of the frequency output signals the gate 13 should pass video data. This only requires that each element of shift memory 1 consists of n subelements and that the video information be processed in the remaining part of the threshold circuit on a time-sharing basis.

## Claims

1. Threshold circuit comprising: a shift memory (1) consisting of at least 2k+m elements; which memory (1) is supplied with sampled and digitised radar video data; two adder circuits (2, 3) one of which being connected to the outputs of the first k elements of the shift memory (1) and the other to the outputs of the last k elements of the shift memory (1); a selection circuit (4) connected to the adder circuits (2, 3), which selection circuit (4) passes the greater of the two output signals from the adder circuits (2, 3), whereby the passed output signal constitutes threshold value ($D_1$) for the radar video data from the centre element of the shift memory (1); and a noise level detector (6) providing a slow threshold value ($D_2$) for the radar data from the centre element of the shift memory (1), characterised in that the noise level detector (6) is connected to the selection circuit (4), and that the threshold circuit further comprises: a comparator (10) for determining the greater of the output signals from the selection circuit (4) and the noise level detector (6); switching means (11) for passing the greater of the two threshold values under control of the comparator output signal; and a gate circuit (13) for passing the radar video data from the shift memory (1), in so far as the amplitude of said video data is in excess of the greater threshold value and is reduced by the second threshold ($D_2$).

2. Threshold circuit as claimed in claim 1, characterised in that the noise-level detector (6) comprises a dip-finder (7) for determining per azimuth scan the minimum value of the signals from the selection circuit (4), and a low-pass filter (8) connected to said dip-finder (7).

3. Threshold circuit as claimed in claim 1 or 2, applied in a pulse radar apparatus provided with an n-point FFT processing unit, characterised in that each element of the shift memory (1) consists of n subelements and that the radar video data, supplied via the n frequency output channels of the FFT processing unit, is transferred serially into the shift memory (1), while during a time interval corresponding with the shift frequency of the shift memory (1) the $p^{th}$ subelements, where p is successively 1, 2, ..., n, are read out in two groups of k signals for processing in the adder circuits (2, 3) on a time-sharing basis, and for each of the n frequency output channels a first and a second threshold is established and the gate circuit (13) passes the radar video data supplied by the shift memory (1) through the appropriate frequency output channel, in so far as the video amplitude is in excess of the larger of the thresholds established for said frequency output channel and is reduced by the second threshold established for said frequency output channel.

## Patentansprüche

1. Schwellenwertschaltung, versehen mit einem aus mindestens 2k+m Elementen bestehenden Schieberegister (1), dem bemusterte und digitalisierte Radar-video-Information zugeführt wird, weiterhin versehen mit zwei Summierschaltungen (2, 3), von denen eine mit den Ausgängen der ersten k Elementen des Schieberegisters (1) und die andere mit den Ausgängen der letzten k Elementen des Schieberegisters (1) verbunden

5  0 054 982  6

ist, einer mit diesen Summierschaltungen (2, 3) verbundenen Selektionsschaltung (4), welche Selektionsschaltung (4) das grösste der beiden Ausgangssignale der Summierschaltungen (2, 3) durchlässt, wobei aus dem durchgelassenen Ausgangssignal ein schnell anpassungsfähiger Schwellenwert ($D_1$) für die vom Mittelelement des Schieberegisters (1) stammenden Radar-video-Information abgeleitet wird, sowie einem Rauschniveaudetektor (6) zur Verschaffung eines langsamvariierenden Schwellenwertes ($D_2$) für die vom Mittelelement des Schieberegisters (1) stammende Radarvideo-Information, dadurch gekennzeichnet, dass der Rauschniveaudetektor (6) mit der Selektionsschaltung (4) verbunden ist, und dass die Schwellenwertschaltung weiterhin einen Komparator (10), mit dessen Hilfe das grösste der Ausgangssignale der Selektionsschaltung (4) und des Rauschniveaudetektors (6) bestimmt wird; und Schaltmittel (11) die unter Steuerung des Komparator-Ausgangssignals den grössten der beiden Schwellenwerte durchlassen sowie eine Torschaltung (13), die die vom Schieberegister (1) stammende Radar-video-Information, unter Reduzierung des zweiten Sch-wellenwertes ($D_2$), durchlässt, vorausgesetzt, dass die Amplitude der erwähnten Radarvideo Information den grössten Schwellenwert übersteigt, umfasst.

2. Schwellenwertschaltung gemäss Anspruch 1, dadurch gekennzeichnet, dass der Rauschniveaudetektor (6) einen Minimalwertdetektor (7), zur Bestimmung des Minimalwertes der von Selektionsschaltung (4) stammenden Signale pro Seitenwinkelabtastung sowie ein mit dem erwähnten Minimalwertdetektor (7) verbundenes Tiefpassfilter (8) umfasst.

3. Schwellenwertschaltung gemäss Anspruch 1 oder 2, angewendet in einem mit einer n-Punkt-FFT-Verarbeitungseinheit versehenen Impulsradargerät, dadurch gekennzeichnet, dass jedes Element des Schieberegisters (1) aus n Subelementen besteht, und dass die über die n Frequenzausgangskanäle der FFT-Verarbeitungseinheit abgegebene Radarvideo-Information in Serie dem Schieberegister (1) zugeführt wird, während weiterhin · während eines mit der Schiebefrequenz des Schieberegisters überein-stimmenden Zeitintervalls die $p^{ten}$ Sub-elemente—wobei p=1, 2, .., bzw. n—auf zeitlich verschachtelte Basis in zwei Gruppen der k Signale zur Verarbeitung in den Summierschaltungen (2, 3) ausgelesen werden und für jeden der n Frequenzausgangskanäle ein erster und zweiter Schwellenwert ermittelt werden und die Torschaltung (13) die vom Schieberegister (1) zugeführte Radarvideo-Information, unter Reduzierung des zweiten für den betreffenden Frequenzausgangskanal ermittelten Schwellenwertes, vorausgesetzt, dass die Video-Amplitude den grössten der für den betreffenden Frequenz-ausgangskanal ermittelten Schwellenwerte über-steigt.

**Revendications**

1. Circuit à seuil comprenant une mémoire à décalage (1) consistant en au moins 2k+m éléments, cette mémoire (1) étant alimentée avec des données vidéo radar échantillonnées et converties en numérique; deux circuits additionneurs (2, 3), sont l'un est relié aux sorties des premiers k éléments de la mémoire à décalage (1) est l'autre aux sorties des derniers k éléments de la mémoire à décalage (1), un circuit de sélection (4) relié aux circuits additionneurs (2, 3), circuit de sélection (4) qui laisse passer le plus élevé des deux signaux de sortie provenant des circuits additionneurs (2, 3), le signal de sortie qui a passé constituant une valeur de seuil rapide ($D_1$) pour la donnée vidéo radar provenant de l'élément central de la mémoire à décalage (1); et un détecteur de niveau de bruit (6) fournissant une valeur de seuil lent ($D_2$) pour la donnée radar provenant de l'élément central de la mémoire à décalage (1), caractérisé en ce que le détecteur de niveau de bruit (6) est relié au circuit de sélection (4) et en ce que le circuit à seuil comprend en outre; un comparateur (10) pour déterminer le plus élevé des signaux de sortie provenant du circuit de sélection (4) et du détecteur de niveau de bruit (6); des moyens de commutation (11) pour faire passer la plus élevée des deux valeurs de seuil sous la commande du signal de sortie du comparateur; et un circuit porte (13) pour faire passer la donnée vidéo radar provenant de la mémoire à decalage (1), dans la mesure où l'amplitude de ladite donnée vidéo dépasse la valeur de seuil la plus élevée et est diminuée par le second seuil ($D_2$).

2. Circuit à seuil selon la revendication 1, caractérisé en ce que le détecteur de niveau de bruit (6) comprend un détecteur de point bas (7) pour déterminer pour chaque balayage azimutal la valeur minimale des signaux provenant du circuit de sélection (4), et un filtrepassebas (8) relié audit détecteur de point bas (7).

3. Circuit à seuil selon la revendication 1 ou 2, appliqué à un appareil radar à impulsions muni d'une unité de traitement FFT à n points, caractérisé en ce que chaque éléments de la mémoire à décalage (1) consiste en n sous-éléments et en ce que la donnée vidéo radar, formée par l'intermédiaire des n cannaux de sortie de fréquence de l'unité de traitement FFT, est transférée en série dans la mémoire à décalage (1), alors que pendant un intervalle de temps correspondant à la fréquence de décalage de la mémoire à décalage (1) les $p^{èmes}$ sous-éléments, où p est successivement 1, 2, ... n, sont lus en deux groupes de k signaux en vue de leur traitement dans les circuits additionneurs (2, 3) sur une base de partage du temps, et pour chacun des n canaux de sortie de fréquence un premier et un second seuil sont établis et le circuit porte (13) laisse passer la donnée vidéo radar fournie par la mémoire à décalage (1) par le canal de sortie de fréquence approprié, dans la mesure où

**0 054 982**

l'amplitude vidéo dépasse le plus élevé des seuils établis pour ledit canal de sortie de fréquence et est diminuée par le second seuil établi pour ledit canal de sortie de fréquence.

Fig. 1

Fig. 2